(19)

Europäisches
Patentamt

European
Patent Office

Office européen
des brevets

(11)   **EP 4 632 503 A1**

(12)   **EUROPEAN PATENT APPLICATION**

(43) Date of publication:
**15.10.2025   Bulletin 2025/42**

(21) Application number: **24169740.8**

(22) Date of filing: **11.04.2024**

(51) International Patent Classification (IPC):
**G05B 9/03** $^{(2006.01)}$

(52) Cooperative Patent Classification (CPC):
**G05B 9/03;** G05B 11/42; G05B 2219/24186;
G05B 2219/24189

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Arnold NextG GmbH
72539 Pfronstetten (DE)**

(72) Inventor: **STRAH, Bruno
64297 Darmstadt (DE)**

(74) Representative: **Kohler Schmid Möbus
Patentanwälte
Partnerschaftsgesellschaft mbB
Kaiserstrasse 85
72764 Reutlingen (DE)**

Remarks:
Amended claims in accordance with Rule 137(2)
EPC.

(54)   **SYNCHRONIZATION OF OUTPUTS FROM MULTIPLE PROCESSORS IN REDUNDANT CONTROL SYSTEMS**

(57)    A control system for an actuator with an input device for the actuator, at least two CPUs (CPU1, CPU2) that comprise an integrator unit and that calculate an output signal ($C_1$,$C_2$) for the actuator and with an evaluator unit that selects one of the CPUs (CPU1, CPU2) and transfers its output signal ($C_1$,$C_2$) to the actuator, wherein each CPU (CPU1, CPU2) receives an input signal ($T_1$, $T_2$) from the input device for the actuator, a sensor signal ($AS_1$, $AS_2$) from the actuator, its own output signal ($C_1$,$C_2$) and the output signal ($C_1$,$C_2$) that gets transferred to the actuator, characterized in that each CPU comprises an observer unit and the observer units of the non-selected CPUs (CPU2) calculate a compensation signal ($u_2$) if their own output signal ($C_2$) and the output signal ($C_1$) transferred to the actuator are not synchronized and feed this compensation signal ($u_2$) back to its integrator unit.

Fig. 2

EP 4 632 503 A1

**Description**

**Background of the invention**

This invention relates to control systems for actuators, wherein multiple processors or CPU's work in parallel receiving essentially the same process inputs and providing the same outputs, to provide redundancy based on process inputs and feedback signals from monitors of the process output. In particular, the invention relates to such control systems wherein integrators are used and systems wherein continuity of the control system output is critical and occasional discontinuities in output is unacceptable.

In control systems with two or more processors for redundancy, these processors essentially receive one or more inputs and provide one or more outputs. Such control systems used for controlling a process, system or plant will essentially consist of more than one processor receiving inputs from more than one sensor or other input provider to be processed. The outputs from the processors are then fed into at least one evaluating unit deciding which output to forward to one or more actuators implementing the requested change of operating state of the process, plant or system.

However, as processors work with a clock frequency and perform operations with small time intervals, timing and synchronization issues will cause the processors to receive a given signal at slightly different times, which means their outputs will also be slightly offset from each other. Furthermore, in redundant systems not only the processing part needs to be redundant, but also the input signal. This means that the input signals will most often also vary slightly relative to each other, causing the processors to receive slightly different input signals at slightly different times and thus provide slightly different output signals. In scenarios where the input signals constantly vary in time, the discrepancy between the output signals will be further increased.

For simple, direct control systems where input signals are processed and an output signal is forwarded to an actuator, the discrepancies are usually negligible and without practical implications. However, for control systems in which a feedback from the output signal is also used as an input signal, the discrepancies between the different output signals will be increased. If the output signal from a redundant processor together with the output signal of the processor selected for momentarily controlling the system is fed back as an input signal to the redundant processor leads to discrepancies between the output signals because in this case the input signals of all processors are different. The output signals of the redundant processors will deviate from the output signal of the selected processor. This can cause a large and sudden shift in the signal forwarded to the actuator if another processor is selected to transfer its output signal to the actuator.

In systems using an integrator function to calculate a compensation signal to be fed back these discrepancies in the output signals of the processor caused by small variations in direct input signals received by each processor and feedback compensation signals based on another processor's output signal will quickly lead to a significant accumulation of discrepancies between the output signals.

In such systems using an integrator function, the discrepancies between the processor output signals will increase over time. This will make it increasingly difficult for an evaluator unit to decide which of the output signals to forward to the actuator, as all processors' output signals will "disagree" more and more with each other. And there is a risk that two or more very distorted output signals are coincidently closer to each other than any of the output signals is to the correct output signal and therefore causes the evaluator unit to forward one of the very distorted output signals.

If one of the processors is selected by the evaluator unit to forward its signal to the actuator for a long time, the increasing discrepancies between the output signal of the processors can lead to an abrupt change of the output signal forwarded to the actuator if the evaluator unit chooses to select a different processor for controlling the actuator. The output signal of the newly selected processor needs to be stabilized that can take some time. Moreover, such sudden changes in the control signal forwarded to the actuator may have serious consequences for the behavior of the system and may initiate countering measures from other systems, worsening the situation.

As an example of the described problems of a controlled system, a steer-by-wire system of a car is considered. The position of the steering wheel is used as an input signal for 3 processors and an evaluator unit compares the output signals of the three processors and selects one of the processors to forward its output signal to an H-bridge with a PID controller of an actuator that controls the steering angle of front wheels of the car. The actual angular position of the steered wheels is fed back to the processors and causes them to calculate a compensation signal for their own output signal.

Over time the accumulated discrepancies between the output signals of the two non-selected processors and the output signal of the selected third processor become so large that the evaluator considers the output signal of one of the non-selected processors as more trustworthy than the output signal of the currently selected processor and shifts the control of the actuator to one of these two processors. As the compensation signal generated by the newly selected processor was based on the accumulation of the discrepancy between this processor's own output signal and the output signal of the previously selected processor, a sudden shift in the output signal forwarded to the actuator causes the actuator to suddenly adjust the steered wheels by a small angle. At best, this occurs at low speed and the driver just experiences a small jolt in the car's trajectory, before the control loop of the system stabilizes the output signal of the selected processor and causes the car to drive straight-ahead. However, at high speed, a small jolt of the steering angle of the steered wheels causes a very sudden change of driving direction that may cause a loss of stability and even a crash of the car. In any case, the small jolt in the steering angle of the wheels is fed back to the steering wheel. That can prompt the driver to make a corrective movement of the steering wheel. This movement of the steering wheel provides a new input signal to the processors that enhances the instability of the system.

A solution to these problems presented in the state of the art suggests to switch the non-selected processors into a tracking mode, wherein the non-selected processors are each fed with a compensation signal generated in such a way that their resulting output signals is identical to the output signal of the selected processor. However, according to this proposal the output signals of the non-selected processors are adjusted to the output signal of the selected processor irrespective of the input signals the non-selected processors receive. Therefore, the evaluator unit will not be able to detect a deviation of the output signal of a processor caused by a faulty input signal. Therefore, the evaluator unit is not able to reliably select the most trustworthy processor to forward its output signal to the actuator of the control system.

## Problem to be solved

The invention intends to provide a control system with redundant processors the output signals of which are synchronized in a manner that avoids a sudden change in the control signal when a different processor is selected to provide the control signal and that at the same time allows a reliable evaluation of the most trustworthy processor.

## Description of the invention

The problem is solved by a control system according to claim 1.
The sub-claims indicate preferred embodiments of the control system.
The solution suggested according to this invention comprises the introduction of an observer unit in each CPU. The observer units of non-selected CPUs calculate a compensation signal, based on the difference between the output signal of these CPUs and the output signal of the selected CPU being forwarded to the actuator.
By further optionally limiting the magnitude of the compensation signals, it can be ensured that the output signal of a CPU is mainly based on the input signal received by that CPU. If there are significant deviations between the input signals of the CPUs the corresponding output signals will also differ significantly. This allows the evaluator unit to more safely determine which CPU is the most trustworthy.
This measure ensures that the output signals of non-selected CPUs will not be identical to the output signal of the selected processor if the input signals of the non-selected CPUs are too different from the input signal of the selected CPU. In case a faulty sensor provides a wrong input, or no input at all, the compensation signal from the observer may otherwise compensate for the wrong or missing input and cause the CPU to provide the right output. This may allow the evaluator to select the CPU receiving the faulty input to become active, whereby control may be lost and the non-selected CPU's receiving compensation signals to also provide wrong outputs, making it difficult or impossible for the evaluator to detect the error and select a CPU with correct input to recover system functionality.

## Detailed description of the invention and the drawing

In a very simple control system an actuator of a machine or plant is controlled by one CPU. An input signal is provided from a sensor or other system calculating a desired change of state of the machine or plant. The input signal could be a desired position of a steering rack or of front wheels of a car with a steer-by-wire system for example. The CPU provides an appropriate output signal as a control signal for the actuator, in order to cause the actuator to perform the requested change of position. Hence, the CPU also receives a sensor signal from the actuator providing information about the actuator's current state or position to be able to calculate an appropriate output signal. If the actuator is already in the requested position, no change is required. If the actuator is not in a position corresponding to the target value, the CPU needs to provide an output signal that depends on how far the actuator's position is from its target value and how fast the actuator needs to be brought into a position or state corresponding to the input. Therefore, the CPU receives a sensor signal of the actuator as a second input signal.
A redundant system comprises at least two CPUs and an evaluator unit that decides the output signal of which CPU is forwarded to the actuator. Both CPUs receive input signals from an input device of the system. In fully redundant systems, these input signals are provided by two separate sensors of the input device in order to provide a redundancy also with regard to the input signal. However, due to this redundancy these input signals can differ slightly. The same applies to the sensor signals of the actuator. Also, the position of the actuator is measured by two or more sensors in a fully redundant system. Therefore, also the sensor signals of the actuator that are fed back to different CPUs can be slightly different. If the input signals and the fed back sensor signals of the actuator are different in different CPUs, their respective output signals will also be different. If the evaluator device is deciding to select a different CPU to forward its output signal to the actuator these different output signals can cause an unwanted sudden shift in the position of the actuator.

However, even if all CPUs receive input signals from the same sensor of the input device and feedback signals from the same sensor of the actuator the CPUs will receive and process these signals at slightly different times if the CPUs are not fully synchronized. However, it would be very difficult to achieve such a synchronization. Therefore, the present invention just aims to mitigate and not to eliminate the problems with deviating output signals of the CPUs due to differing input signals from the input device and sensor signals from the actuator.

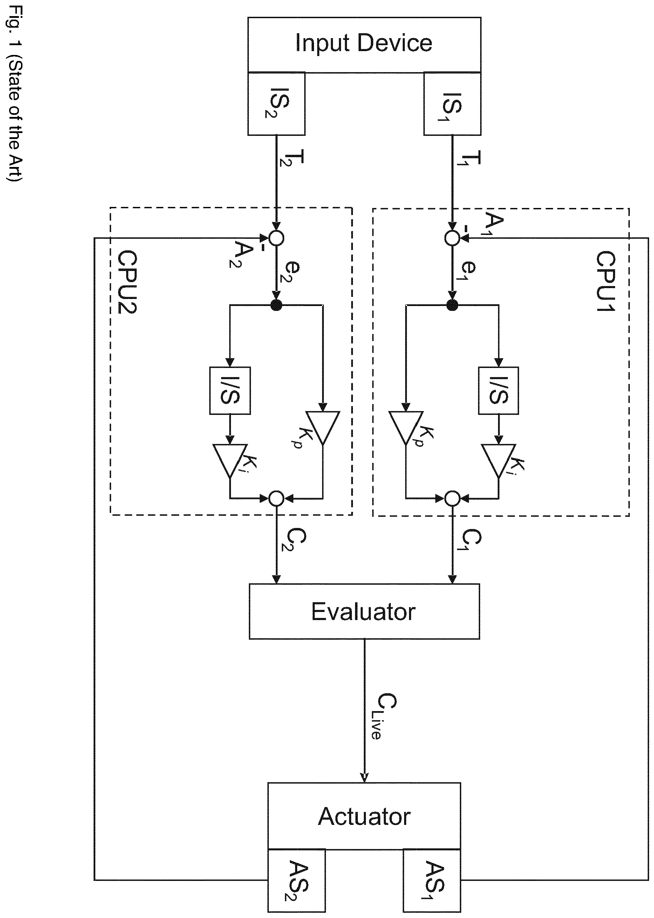

Fig. 1 shows a dual CPU control system according to the state of the art. The two CPUs, CPU1 and CPU2, are PI-controllers. An input device is fitted with two Input sensors $IS_1$ and $IS_2$, measuring the position of the input device. As discussed above, these sensors $IS_1$ and $IS_2$ measure the same input value but may provide signals $T_1$ and $T_2$ as target values for the actuator, that are slightly different from each other and that may be processed at slightly different times by the CPUs CPU1 and CPU2. An actuator of the system is also fitted with two sensors AS1 and AS2 providing each CPU, CPU1 and CPU2, with signals $A_1$ and $A_2$, each representing the sensor measurements of the actual state or position of the actuator. Like the target values $T_1$ and $T_2$, the actual values $A_1$ and $A_2$ may also differ slightly.

Each of the CPU's, CPU1 and CPU2 calculate error values $e_1$ and $e_2$ as the difference between $T_1$ and $A_1$ or $T_2$ and $A_2$ respectively. The error value signals $e_1$ and $e_2$ are received by an amplifier, that multiply the error values $e_1$ and $e_2$ by a proportional gain factor $K_p$. The error values $e_1$ and $e_2$ are also received by integrators, integrating the error values $e_1$ and $e_2$ over time and the result is multiplied by an integration gain factor $K_i$. The outputs of the proportional amplifier ($e_x \cdot K_p$) is then added to the output of the integration amplifier ($\int e_x \, dt \cdot K_i$) to provide the outputs $C_1$ and $C_2$. The output signals $C_1$, $C_2$ of the CPUs CPU1 and CPU2 are thus signals consisting of the error values $e_1$ and $e_2$ multiplied with the proportional gain factor $K_p$ added to the integrated correction values of the integrators multiplied by the integration gain factor $K_i$, that reduce the error values $e_1$ and $e_2$ over time.

If CPU1 is selected by an evaluator unit as the most trustworthy it will forward its output signal $C_1$ to the actuator. The output signal $C_2$ of the non-selected CPU2 is slightly different form the output signal $C_1$ forwarded to the actuator. CPU2 tries to reduce its error value $e_2$. However, because the actuator sensor signal AS2 that is fed back to CPU2 is influenced by the output signal $C_1$ of CPU1 and not by the output signal $C_2$ of CPU2 there can occur an increase in the error value $e_2$ instead of a reduction of this value. The error value $e_2$ may become so large that its multiplication by the controller gain factor Kc will result in the output signal $C_2$ reaching saturation. The integrator 21 is integrating a constantly increasing value of $e_2$, therefore contributing to the increase of $e_2$ until $C_2$ reaches is saturation value.

If a CPU goes into saturation, the redundancy of the system is lost. The evaluator has no functioning backup CPU to switch to in case of failure of CPU1 and CPU2 being in saturation.

If the evaluator switches from CPU1 to CPU2 to forward its output signal $C_2$ to the actuator before CPU2 reaches saturation, there will occur a sudden and significant change in the state of the actuator because the output signal $C_2$ will be significantly different from the output signal $C_1$ that has previously controlled the actuator. The corresponding change in the sensor signal $AS_2$ will eventually cause CPU2 to eliminate the previous increase in the error signal $e_2$. However, the sudden change of the behavior of the actuator can jeopardize the desired performance of the whole system.

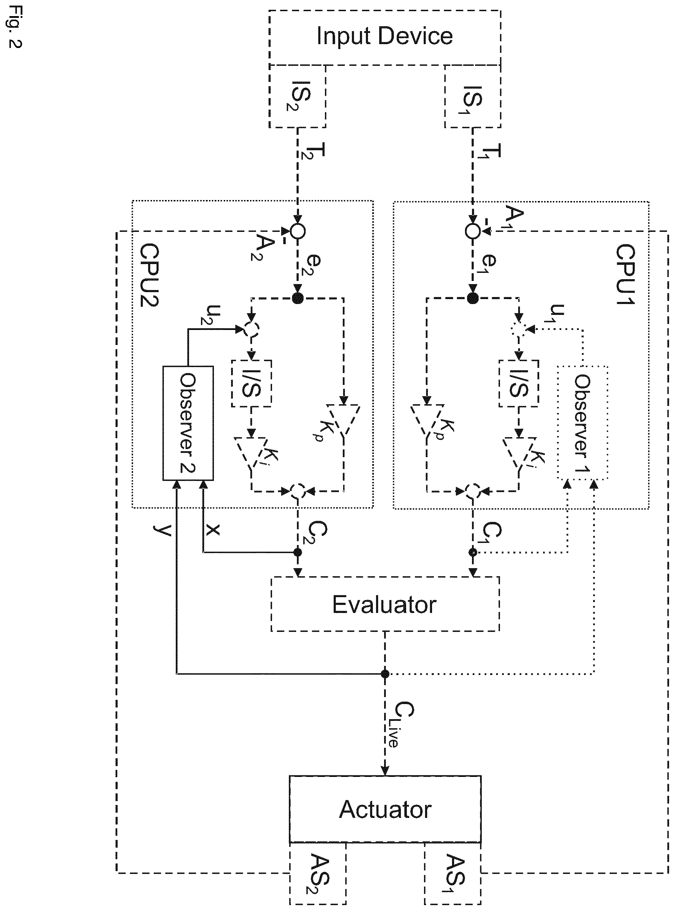

Fig. 2 depicts the simplest implementation of a control system according to the invention. In contrast to the system shown in fig. 1 each CPU CPU1, CPU2 comprises an observer unit wherein only the observer unit of the non-selected CPU2 is active. This is indicated by the dotted lines depicting the observer unit of CPU1 that is selected by the evaluator to forward its output signal $C_1$ as a control signal C to the actuator.

The observer unit of CPU2 receives the output signal $C_1$ of the selected CPU1 as an input signal y and the output signal $C_2$ of its own CPU2 as an input signal x.

The observer unit calculates a compensation signal $u_2$ that is fed as an additional input to the integrator part of CPU2 in order to compensate the offsets between the input signals $e_1$ and $e_2$ of the CPUs CPU1 and CPU2. Thus, the output signals $C_1$ and $C_2$ of CPU1 and CPU2 get synchronized.

The compensation signal $u_2$ required to be provided by the observer unit can be determined as follows: Possible discrepancies between the target value and the actual value of the actuator shall be eliminated. And there can be an offset between $T_1$ and $T_2$ as well as between $AS_1$ and $AS_2$, wherein the size of both offsets is unknown.

When CPU 1 is live, CPU 1 is the reference for CPU 2. CPU 1 operates with an Error value $e_1$ given by:

$$e_1 = T_1 - AS_1,$$

where $T_1$ is the target value for CPU1 and $AS_1$ is the actual value for CPU1

If offsets $\Delta T$ and $\Delta AS$ are assumed, such that $T_2 = T_1 + \Delta T$ and $AS_2 = AS_1 + \Delta AS$ the error value $e_2$ of CPU2, that can also be indicated as a disturbance value $d_i$, can be calculated as:

$$d_i = e_2 = T_1 + \Delta T - (AS_1 + \Delta AS) = T_1 - AS_1 + \Delta T - \Delta AS = e_1 + \Delta T - \Delta AS$$

When the compensation signal $u_2$ is applied to the integrator unit of CPU2, the input x is:

$$x = \frac{K_i}{s}(u_2 + d_i) + K_p d_i$$

As the compensation signal $u_2$ must eliminate the difference of the observer unit input signals x and y the required compensation signal can be calculated as:

$$u_2 = \left(\frac{K_{it}}{s} + K_{pt}\right)(y - x)$$

The transfer function disturbance -> output signal x can then be determined as:

$$\frac{x}{d_i} = \frac{s(K_p s + K_i)}{s^2 + K_i K_{pt} s + K_i K_{it}}$$

The transfer function disturbance -> compensation signal $u_2$ can be determined as:

$$\frac{u_2}{d_i} = -\frac{K_p K_{pt} s^2 + (K_p K_{it} + K_i K_{pt})s + K_i K_{it}}{s^2 + K_i K_{pt} s + K_i K_{it}}$$

From general 2nd order system equation, it follows from the eigenfrequency equation that:

$$\omega_0^2 = K_i K_{it}$$

and from the relative damping equation, that:

$$2D_I \omega_0 = K_i K_{pt}$$

For given eigenfrequency and relative damping the observer gain is:

$$K_{pt} = \frac{2D_I \omega_0}{K_i}, \quad K_{it} = \frac{\omega_0^2}{K_i},$$

*where* $D_I$ and $\omega_0$ are design parameters to be optimized for each particular control system Assuming critical relative damping, the transfer function disturbance -> compensation signal becomes:

$$\frac{u}{d_i} = -\frac{\left(s + \frac{\omega_0}{2}\right)\left(s + \frac{K_i}{K_p}\right)}{(s + \omega_0)(s + \omega_0)}$$

The discrepancies between target values $T_1$, $T_2$ and actual values $AS_1$, $AS_2$ received by CPUs CPU1 and CPU2 must by nature be small compared to the size of the target values $T_1$, $T_2$ and actual values $AS_1$, $AS_2$, as they are representing the same parameter values. The major part of the input provided to CPU2 will still be the target value $T_2$ and actual value for $AS_2$ and not the compensation signal $u_2$. Thus, CPU2 can still be considered to run independently from CPU1 and its performance can be evaluated as if it would not receive a compensation signal.

However, in the event of a significant error in or complete loss of any of the signals $T_2$ or $AS_2$, the compensation signal $u_2$ may obscure this error and causing CPU2 to sill provide the same output signal as selected CPU1. This introduces a risk that in the event of a failure detected in CPU1, the evaluator shifts to select CPU2, not realizing the operation of CPU2 is also compromised and control is now lost without warning. Thus, a threshold should be set on the magnitude of the compensation signal, such that if larger disturbances or discrepancies in one of the CPU's inputs occur, the compensation signal u is no longer able to compensate fully and the evaluator will be able to detect the difference in the output signals of CPU1 and CPU2 and therefore also detect a loss of the backup CPU (CPU2).

The observer units can have different configurations. They can provide their compensation signal u to the integrator unit only or also to the amplifiers 25, 26 of CPU1, CPU2.

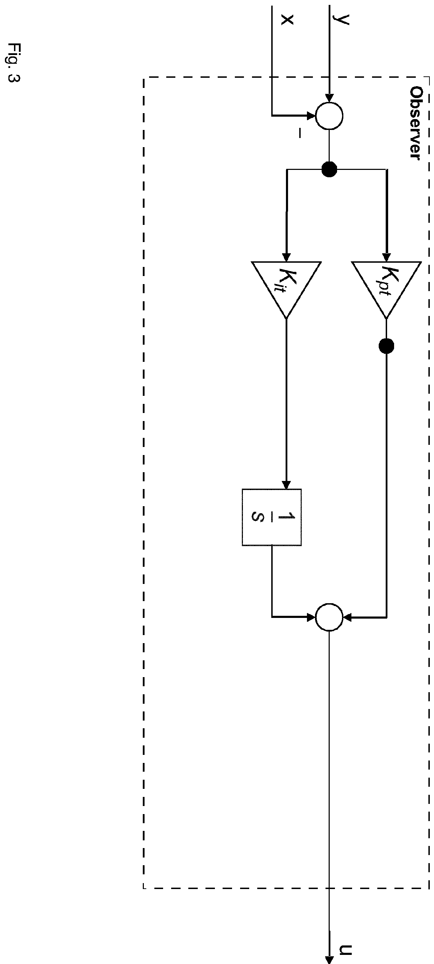

Fig. 3 illustrates a basic configuration of an observer unit.

It should be understood that although a simple PI controller is used in CPU1 and CPU2 to illustrate and exemplify the features of the invention, the invention is equally applicable to control systems using other types of controllers, provided they incorporate an integrator.

A basic observer unit receives the output signal x from its own CPU (CPU2) and the output signal y from the selected CPU (CPU1) as inputs and provides a compensation signal u.

As the purpose of the observer unit is to provide each CPU with a compensation signal resulting in a synchronized output signal C, there is a risk that a faulty input to the CPU is hidden and cannot be discovered by the evaluator. Thus, it is preferable to limit the maximum difference between the output signals of the non-selected CPU and the selected CPU that can be compensated by the observer unit. This means that a threshold for the compensation signal u must be set.

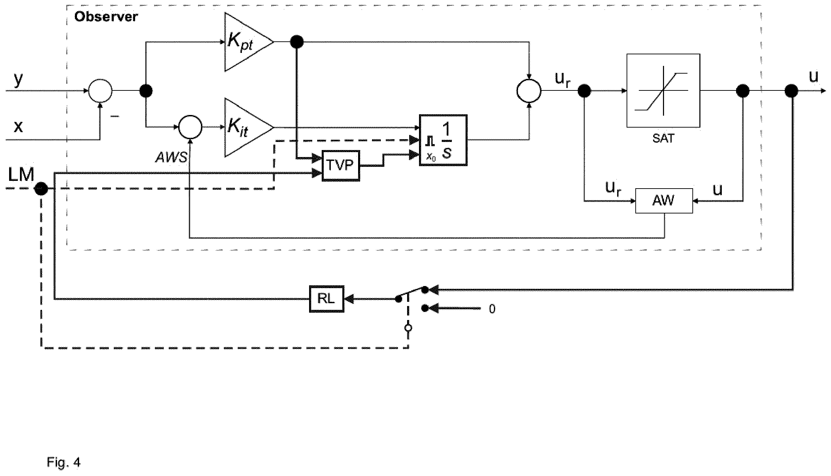

Thus, a saturation unit (SAT) limiting the output to be within defined limits may be implemented, as shown in fig. 4. The saturation unit (SAT) receives the real (determined) output signal $u_r$ from the observer and evaluates the signal. If the signal is within the defined threshold limits of the observer output, the signal is passed on as the output u from the observer with no change ($u=u_r$). If the signal is outside the threshold limits, positive or negative, the SAT limits the output u to be at the threshold limit, positive or negative, such that for $u_r<0$, $u>u_r$ and for $u_r>0$, $u<u_r$.

In some scenarios, the observer may go into a state of saturation, e.g. if the differences between inputs X and Y are too high, resulting in an intended output $u_r$ of a larger magnitude than the observer is actually capable of providing. This may cause the integrator to wind up and start integrating towards infinity, as the corrections imposed by the integrator does not seem to have any effect on the output $u_r$, as the output $u_r$ is limited. A wind-up of the integrator will prevent the observer to recover and get out of its state of saturation. A wind-up of the integrator starting to integrate towards infinity may also cause the controller to go into a state of saturation in the first place and then continue and prevent the controller from getting out of the state of saturation. Thus, an anti-wind-up (AW) function can be added too in order to prevent the integrator from integrating towards infinity and allow the controller to recover quickly from a state of saturation.

The anti-wind-up unit (AW) receives both the raw output ($u_r$) and the forwarded output (u) from the observer. The AW-unit then subtracts the two signals from each other and forwards the resulting signal (*AWS*) to the integrator part of the observer. This will cancel-out or significantly reduce the contribution from the integrator to the observer output $u_r$ and thus reduce output to below saturation or threshold limit. As the AW-unit forwards the difference between the signals u and $u_r$, the *AWS* feedback is zero under normal operation were $u=u_r$. The AW-feature can also be implemented in the CPU itself. Its output signal is also always limited (e.g. max. voltage). Different other known techniques to prevent wind-up can be used instead.

To enable the observer unit to be active in non-selected CPUs and inactive in the selected CPU a switch could be incorporated and instead of providing the compensation signal u from the observer unit as an input to the selected CPU a zero-value could be switched in instead.

However, if switched instantly from being provided with a compensation signal u (different from zero), the controller CPU would also change its output signal instantly, as controller would suddenly no longer be synchronized to provide the same control value as the CPU being live just prior to the switch of liveliness. Since the purpose of the invention is to prevent sudden jolts in the output signal of the CPU becoming selected, even if the compensation signal will significantly reduce the magnitude of a sudden shift in the output signal, it may be desirable to ramp out the compensation signal over time and smoothen the transition of the output signal from being compensated to not being compensated. Thus, a Boolean signal indicating a CPUs selection status or Live Mode (LM) is introduced. When a CPU is selected by the evaluator to forward its output signal to the actuator, the selected CPU is provided with an LM value of TRUE, while all other CPUs are provided with an LM value of FALSE.

An integrator able to switch to feed-through mode is incorporated and a rate limiter RL is introduced to provide the ramp-down of the compensation value. The rate limiter RL forwards its input signal as an output signal but with a limited output rate, i. e. with a limited speed of change. This means that if the input suddenly changes significantly, the output will change accordingly but spread over a longer time, depending on which limit has been set to the rate of change. A tracking value-processing device TVP can also be introduced. This device receives the output signal from the RL, which is the rate limited value of the observer unit's compensation signal u, as well as the output of the amplifier part of the CPU. By subtracting the amplified signal from the compensation signal u, the TVP can provide a signal that corresponds to the signal of the integrator.

The LM and the RL are not a part of the observer unit but means for activating and deactivating the observer unit and at the same time allowing a gradual deactivation of the observer unit. When a CPU is non-selected and the observer unit must be active, a LM signal of FALSE is received by this system, switching the input signal of RL from a zero-input to the compensation signal u (which will be zero in the beginning as well). The LM=FALSE information is also fed to the integrator, activating the integrator to integrate the signal of the integrator gain.

If the evaluator decides a so far non-selected CPU should become live, the LM signal changes to TRUE and the input of RL switches to a zero input. This causes the output signal from RL to gradually decrease to zero, with a declining rate determined by the rate limit. The LM=TRUE signal also switches the mode of the integrator to receive the input of the TVP instead of the integrator gain and forward this signal without integrating. It should be noted that the selection of the CPU to forward its output signal C to the actuator also means that x=y (although timing/synchronization issues may cause small deviations). This means that the output of the proportional part will become a small part of the output signal. The TVP receives the slightly reduced last value of u and subtracts the (small) proportional part of the signal and thus feeds the integrator with a lower signal than the last value of u because the proportional part has been subtracted.

The integrator is in feed-through mode and provides the slightly diminished compensation signal u as an integrator output. Then the proportional part is added to the signal again and the sum, now lower than the last value of u, becomes the next value of u and the cycle is repeated until u reaches zero.

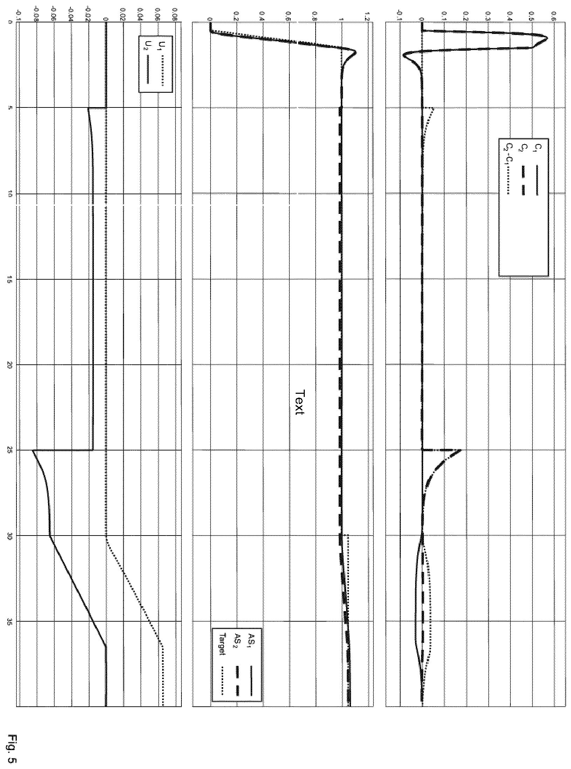

Fig. 5 shows a simulation of the performance of the system to control the steering angle of the front wheels of a car wherein the system is configured according to fig. 3 and the observer unit according to fig. 4.

The driver of the car starts turning the steering wheel just after t=0, which causes the output signals $C_1$, $C_2$ of both CPUs to increase and the actual values $AS_1$ and $AS_2$ show that the front wheels change direction accordingly. The scale of the axis has been changed to enable better distinction between the graphs. Since there is no difference between the target values $T_1$, $T_2$ and no difference between the actual values $AS_1$ and $AS_2$, there is also no difference between the output signals $C_1$ and $C_2$ as both CPUs operate under the same control law. This means that the compensation signal u of the observer unit is 0, as shown in the lower graph.

At t=5, again a small discrepancy between the actual values $AS_1$ and $AS_2$ occurs, which cause the output signal $C_2$ of CPU2 to start deviating from the control value $C_1$ from CPU1 as the target value $T_2$ and actual value $AS_2$ of CPU2 are no longer in accordance. The observer unit now receives two different output signals from the CPUs and change the compensation signal $u_2$ for CPU2, as can be seen in the lower graph. The application of the compensation signal $u_2$ on CPU2 causes the output signal $C_2$ to start declining to 0, in line with the output signal $C_1$ of CPU1, as shown in the upper graph. From the center graph, it can be seen that the actual value $AS_2$ for CPU2 remains different from the actual value $AS_1$ for CPU1, even if the output signals $C_1$ and $C_2$ of CPU1 and CPU2 are both zero. At t=25 a small offset occurs in the target value $T_2$ and this small discrepancy between the two target values $T_1$ and $T_2$ causes an increase of the output signal of CPU2 in the upper graph, which again leads to a sudden further decrease of the compensation signal $u_2$ for CPU2. This in turn causes the output signal of CPU2 to start dropping and adjust to the output signal of CPU1.

At t=30, just when the output signal $C_2$ of CPU2 is back to 0 together with the output signal $C_1$ of CPU1, the evaluator decides to select CPU2 instead of CPU1 to forward its output signal $C_2$ to control the actuator. This means that $C_2$=0 is being forwarded to the actuator and no torque is applied to the steering gear. Thus, the car is driving straight ahead. At t=30 $C_1$ is simply replaced by the output signal $C_2$ having the same value and thus there is no sudden torque applied to cause a sudden change of position of the steering gear. However, as CPU2 is now selected and target value $T_2$, different from $T_1$, is now the target value being used by the selected CPU2, the output signal $C_2$ slowly increases a little, which is barely visible, as the compensation signal u is gradually decreased. Thereby the system gradually transitions from a state in which target value $T_1$ leads to CPU1 controlling the actuator to achieve an actual value $AS_1$, to a state in which target value $T_2$ (different from $T_1$) leads to CPU2 controlling the actuator to achieve an actual value $AS_2$ (different from $AS_1$). The target values $T_1$ and $T_2$ are both representing the same physical position of the input device (here a steering wheel) and the actual values $AS_1$ and $AS_2$ are both representing the same physical position of the actuator/steering gear. Therefore, by switching for CPU1 to CPU2 controlling the actuator the system slowly changes the position of the actuator (steering gear) in relation to a fixed position of the steering wheel. However, as the steering wheel is controlled by a human driver, the driver would compensate for this small and slow drift without noticing it.

In multi-CPU systems, each CPU needs to be fitted with an observer unit and all observer units must be able to receive the output signal of the selected CPU. Therefore, all observer units are preferably connected to the output of the evaluator, that defines which CPU is selected transfers the output signal of the selected CPU to the actuator.

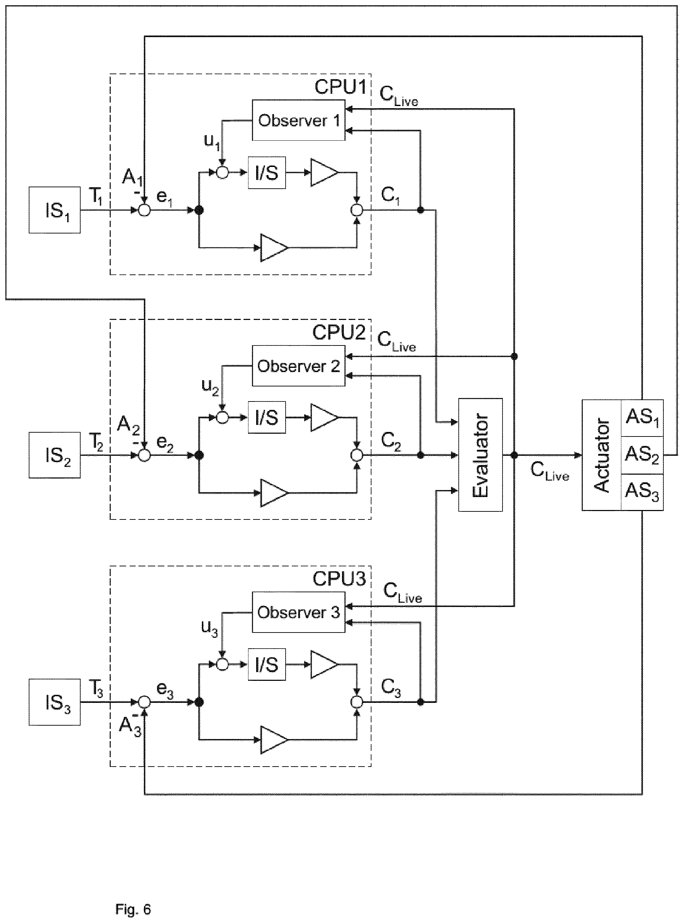

Fig. 6 illustrates such a system with three CPUs.

The invention comprises any control system using two or more CPUs, incorporating an {X}+I control loop, where X is a general dynamics control, which could be a P- or PD-control loop in each CPU. It should also be noted that the observer unit can be implemented as a part of the CPU or CPU hardware, as an independent electronic circuit or as a software or program in a programmable processing unit.

**Claims**

1. Control system for an actuator with an input device for the actuator, at least two CPUs (CPU1, CPU2, CPU3) that comprise an integrator and that calculate an output signal ($C_1$, $C_2$, $C_3$) for the actuator and with an evaluator unit that selects one of the CPUs (CPU1) and transfers its output signal ($C_1$) to the actuator, wherein each CPU (CPU1, CPU2, CPU3) receives an input signal ($T_1$, $T_2$, $T_3$) AS ($AS_1$, $AS_2$, $AS_3$) from the input device for the actuator, a sensor signal

AS ($AS_1$, $AS_2$, $AS_3$) from the actuator, its own output signal ($C_2$) and the output signal ($C_1$) that gets transferred to the actuator, **characterized in that** each CPU (CPU1, CPU2, CPU3) comprises an observer unit and the observer units of the non-selected CPUs (CPU2, CPU3) calculate a compensation signal ($u_2$, $u_3$) if their own output signal ($C_2$, $C_3$) and the output signal ($C_1$) transferred to the actuator are not synchronized and feed this compensation signal ($u_2$) back to its integrator.

2. Control system according to claim 1, wherein the compensation signals ($u_1$, $u_2$, $u_3$) are calculated in such a manner that the transferred output signal ($C_1$) and the output signals ($C_2$, $C_3$) of the non-selected CPUs (CPU2, CPU3) become identical.

3. Control system according to claim 1 or 2, wherein the observer units have a PI structure.

4. Control system according to one of the preceding claims, wherein the observer units limit the values of the compensation signals ($u_1$, $u_2$, $u_3$) between a predetermined lower threshold value and a predetermined upper threshold value.

5. Control system according to one of the preceding claims, wherein the observer units comprise an anti-windup unit (AW).

6. Control system according to one of the preceding claims, wherein the observer unit of the selected CPU (CPU1) feeds back a zero-value signal to its integrator unit.

7. Control system according to one of the preceding claims, wherein the CPUs comprise a Boolean indicator that indicates if the CPU (CPU1, CPU2, CPU3) is selected by the evaluator or not.

8. Control system according to one of the preceding claims, wherein the CPUs (CPU1, CPU2, CPU3) comprise a rate-limiting device (RL).

9. Control system according to one of the preceding claims, wherein the CPUs (CPU1, CPU2, CPU3) comprise a tracking value-processing device (TVP).

**Amended claims in accordance with Rule 137(2) EPC.**

1. Control system for an actuator with an input device for the actuator, at least two CPUs (CPU1, CPU2, CPU3) each comprising an integrator configured to calculate an output signal ($C_1$, $C_2$, $C_3$) for the actuator using that integrator and with an evaluator unit configured to select one of the CPUs (CPU1) and transfer its output signal ($C_1$) to the actuator, wherein each CPU (CPU1, CPU2, CPU3) receives an input signal T ($T_1$, $T_2$, $T_3$) from the input device for the actuator, a sensor signal AS ($AS_1$, $AS_2$, $AS_3$) from the actuator, its own output signal ($C_2$) and the output signal ($C_1$) that gets transferred to the actuator, **characterized in that** each CPU (CPU1, CPU2, CPU3) comprises an observer unit and the observer units of the non-selected CPUs (CPU2, CPU3) are configured to calculate a compensation signal ($u_2$, $u_3$) if their own output signal ($C_2$, $C_3$) and the output signal ($C_1$) transferred to the actuator are different and add this compensation signal ($u_2$) to the input of its integrator, wherein the compensation is calculated as follows:

$$u_2 = \left(\frac{K_{it}}{s} + K_{pt}\right)(y - x),$$

wherein $u_2$ is the compensation signal, x is the own output signal, y is the signal transferred to the actuator, 1/s is the integral operator and $K_{it}$, $K_{pt}$ are gains.

2. Control system according to claim 1, wherein the observer units are configured to limit the values of the compensation signals ($u_1$, $u_2$, $u_3$) between a predetermined lower threshold value and a predetermined upper threshold value.

3. Control system according to one of the preceding claims, wherein the observer units comprise an anti-windup unit (AW).

4. Control system according to one of the preceding claims, wherein the CPUs comprise a Boolean indicator that indicates if the CPU (CPU1, CPU2, CPU3) is selected by the evaluator or not.

Fig. 1 (State of the Art)

Fig. 2

Fig. 3

Observer

$K_{it}$

$K_{pt}$

$\dfrac{1}{s}$

x

y

u

Fig. 4

Fig. 5

Fig. 6

EP 4 632 503 A1

Europäisches Patentamt
European Patent Office
Office européen des brevets

# EUROPEAN SEARCH REPORT

Application Number

EP 24 16 9740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/040137 A1 (AUTOLIV DEV [SE]; WILLERTON MARK [SE]; WEICHENBERGER LOTHAR [DE]) 2 April 2009 (2009-04-02) | 1,2,4-9 | INV. G05B9/03 |
| A | * page 5 - page 6; figure 1 * | 3 | |
| | ----- | | |

**TECHNICAL FIELDS SEARCHED (IPC)**

G05B

The present search report has been drawn up for all claims

| Place of search | Date of completion of the search | Examiner |
|---|---|---|
| The Hague | 27 September 2024 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

EP 24 16 9740

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| WO 2009040137 A1 | 02-04-2009 | DE 102007046706 A1 | 16-04-2009 |
| | | EP 2190712 A1 | 02-06-2010 |
| | | WO 2009040137 A1 | 02-04-2009 |

EPO FORM P0459

For more details about this annex : see Official Journal of the European Patent Office, No. 12/82